# EUROPÄISCHE PATENTSCHRIFT

(11) **EP 3 626 898 B1**
(45) Veröffentlichungstag und Bekanntmachung des Hinweises auf die Patenterteilung: **09.12.2020**
(21) Anmeldenummer: 19195374.4
(22) Anmeldetag: 04.09.2019
(51) Int. Cl.: E04B 1/58, F16B 7/04, E04B 1/24

(54) **PROFILROHRSYSTEM**
PROFILE PIPE SYSTEM
SYSTÈME DE TUBES PROFILÉS

(30) Priorität: 20.09.2018 DE 102018216086
(43) Veröffentlichungstag der Anmeldung: 25.03.2020
(73) Patentinhaber: Rixen, Wolfgang Klaus, 42699 Solingen (DE); Pies, Gerrit, 42699 Solingen (DE)
(72) Erfinder: Netthöfel, Moritz, 40764 Langenfeld (DE); Brada, Till, 40723 Hilden (DE); Barnat, Tobias, 42653 Solingen (DE); Michalek, Waldemar, 42857 Remscheid (DE); Armbruster, Stefan, 42579 Heiligenhaus (DE)
(74) Vertreter: BRP Renaud & Partner mbB Rechtsanwälte Patentanwälte Steuerberater

(56) Entgegenhaltungen:
- EP-A1- 1 617 087
- DE-A1- 10 017 897
- DE-A1-102009 042 238
- JP-A- 2003 172 323
- Anonymous ET AL: "Mechanik-Grundelemente", Katalog MGE 13.0, 6 September 2012 (2012-09-06), XP055427109, Retrieved from the Internet: URL:http://www.betz.cz/download_soubory/Ka talog_MGE_13.0_DE.pdf [retrieved on 2017-11-21]

## Beschreibung

Die vorliegende Erfindung betrifft ein Profilrohrsystem mit zumindest einem Profilrohr gemäß dem Oberbegriff des Anspruchs 1. Die Erfindung betrifft außerdem einen Verbinder für ein solches Profilrohrsystem gemäß dem Oberbegriff des Anspruchs 7.

Gattungsgemäße Profilrohrsysteme sind bereits vielfältig bekannt und werden insbesondere für den schnellen, anspruchsvollen und lösungsorientierten Betriebsmittelbau eingesetzt. Von großem Vorteil ist dabei unter anderem, dass nahezu beliebige Bauteile an die Profilrohre angebaut und dadurch ein derartiges Profilrohrsystem bzw. Rundrohrsystem äußerst flexibel genutzt werden kann.

Die einzelnen Profilrohre eines solchen Profilrohrsystems werden dabei üblicherweise über längsendseitig angeordnete Verbinder miteinander verbunden, wobei diese Verbinder üblicherweise zwei Halbschalen aufweisen, die über eine Schraubverbindung miteinander verschraubt werden können.

Darüber hinaus besitzen derartige Verbinder eine sacklochartige Rohraufnahme, so dass ein derartiger Verbinder über ein freies Längsende eines zugehörigen Profilrohrs übergestülpt und dann durch Anziehen der Schraubverbindung fest auf dem Profilrohr fixiert werden kann.

Nachteilig bei den aus dem Stand der Technik bekannten Profilrohrsystemen ist jedoch, dass eine Drehfixierung eines jeweiligen Profilrohrs in einer zugehörigen Rohraufnahme eines Verbinders eines Profilrohrsystems über ein separates Bauteil, üblicherweise über ein sogenanntes Fliesenkreuz erfolgt, wozu zunächst das Fliesenkreuz entweder in der Rohraufnahme oder in einem Längsende des darin einzusteckenden Profilrohrs fixiert werden muss. Das als Fliesenkreuz ausgebildete zusätzliche Bauteil erfordert dabei zusätzliche Herstell-, Lager-, Logistik- und Montagekosten. Fehlt ein derartiges Bauteil, beispielsweise ein solches Fliesenkreuz, so ist eine Drehfixierung des Profilrohrs in der sacklochförmigen Rohraufnahme ausschließlich über die von den zwei Halbschalen des Verbinders ausgeübten Klemmkräfte möglich. Als weiterer Nachteilt bei bekannten Verbindern derartiger Profilrohrsystemen ist bekannt, dass diese für die Verwendung von sogenannten Doppelrohrprofilen mit zwei parallelen Profilrohren, die über einen Steg miteinander verbunden sind, nicht geeignet sind, da dieser Steg zwischen den beiden Halbschalen des Verbinders nach außen geführt werden müsste, was mit den herkömmlichen Verbindern nicht möglich ist. Aus diesen Grund können bislang aus dem Stand der Technik bekannte Verbinder ausschließlich dann für die Befestigung von Doppelrohrprofilen eingesetzt werden, sofern bei diesen der Steg in einem Längsendbereich, welcher später benachbart zu den Verbindern angeordnet ist, entfernt wird. Dies erfordert jedoch zusätzliche Fertigungs- bzw. Herstellkosten.

DE 10 2009 042 238 A1 offenbart ein Profilrohrsystem nach dem Oberbegriff des Anspruchs 1 und einen Verbinder nach dem Oberbegriff des Anspruchs 7.

Die vorliegende Erfindung beschäftigt sich darin mit dem Problem, für ein Profilrohrsystem der gattungsgemäßen Art eine verbesserte zumindest eine alternative Ausführungsform anzugeben, die die aus dem Stand der Technik bekannten Nachteile überwindet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein Profilrohrsystem anzugeben, mit zumindest einem Profilrohr mit zumindest zwei parallelen Längsnuten/Profilnuten und mit einem Verbinder zum längsendseitigen Aufstecken auf dem Profilrohr, wobei an dem Verbinder eine integrierte Verdrehsicherung vorgesehen ist, die keinerlei zusätzliche Montage erfordert, da diese einstückig mit einer jeweiligen Halbschale des aus zwei Halbschalen bestehenden Verbinders ausgebildet ist. Der Verbinder des erfindungsgemäßen Profilrohrsystems besitzt eine erste Halbschale und eine zweite Halbschale, die über eine Schraubverbindung miteinander verschraubbar sind. Ebenfalls besitzt der Verbinder eine sacklochartige Rohraufnahme mit einem Boden, in welche das Profilrohr einsteckbar und in der das Profilrohr über die zwei fest miteinander verschraubten Halbschalen fixierbar ist. Erfindungsgemäß ist nun an einer Innenmantelfläche der Rohraufnahme der ersten und/oder zweiten Halbschale zumindest eine nach innen abstehende Nase angeordnet, die in montiertem Zustand des Profilrohrsystems in eine Längsnut des Profilrohrs eingreift und dieses dadurch an einem Verdrehen hindert bzw. eine Verdrehsicherung für dieses bildet. Die zumindest eine Nase ist dabei integral, das heißt einstückig, mit der jeweiligen Halbschale ausgebildet und dadurch zusammen mit dieser in einem einzigen und gemeinsamen Herstellungsprozess herstellbar. Eine nachträgliche Montage einer derartigen Verdrehsicherung ist somit nicht erforderlich.

Die zumindest eine Nase ist dabei vorzugsweise als radial nach Innen abstehender und sich über einen gewissen Umfangsbereich erstreckender Kragen ausgebildet, wobei eine Erstreckung in Umfangsrichtung im Wesentlichen der Erstreckung der zugehörigen Längsnut am Profilrohr in Umfangsrichtung entspricht, sodass bei einem montierten Profilrohrsystem die zumindest eine Nase spielfrei in die zugehörige Längsnut eingreift und dadurch eine zuverlässige und spielfreie Verdrehsicherung bildet. Eine solche Nase kann vergleichsweise einfach, beispielsweise durch ein einfaches Ändern eines Herstellungswerkzeuges, an einer im Übrigen bislang bereits bekannten Halbschale angeformt werden. Durch eine in diesem Absatz und/oder im vorherigen Absatz beschriebene Nase kann insbesondere auf ein bislang zur Realisierung der Verdrehsicherung erforderliches Fliesenkreuz bzw. weiteres Bauteil verzichtet werden, wodurch sich insbesondere die Herstellungs-, die Lager-, die Logistik- und die Montagekosten reduzieren lassen, da kein weiteres Bauteil hergestellt, vorgehalten und montiert werden muss.

Zweckmäßig weist die zumindest eine Nase eine Sollbruchstelle auf und ist durch ein Abknicken abbrechbar, wodurch eine drehwinkelunabhängige Fixierung des Profilrohrs in der Rohraufnahme des Verbinders darstellbar ist. Durch ein einfaches Abknicken der zumindest einen Nase bzw. sämtlicher Nasen in der jeweiligen Rohraufnahme des Verbinders ist somit ein beliebiges Verdrehen des Profilrohrs um seine Längsachse und ein Fixieren desselben ausschließlich durch die über die beiden Halbschalen mittels der Schraubverbindung ausgeübten Klemmkräfte möglich. Die Nase ist dabei vorzugsweise so ausgebildet, dass sie einfach mittels eines Schraubenziehers abgebrochen bzw. abgeknickt werden kann, wobei ein Abknicken und damit ein Abbrechen der Nase durch ein Einführen eines entsprechenden Werkzeugs, beispielsweise eines Schraubenziehers, parallel zur Längsachse der Rohraufnahme an der Innenmantelfläche bewirkt wird. Durch die spezielle Ausführungsform der zumindest einen erfindungsgemäßen Nase, nämlich insbesondere als sich in Umfangsrichtung erstreckender Kragen, kann die Sollbruchstelle, beispielsweise als Querschnittsverdünnung ausgebildet sein, wodurch eine von der zumindest einen Nase in Umfangsrichtung aufbringbare Kraft, die der Verdrehsicherung des Profilrohrs in der Rohraufnahme dient, vergleichsweise groß ist, während eine zum Abknicken der zumindest eine Nase erforderliche Kraft deutlich kleiner ist. Selbstverständlich können dabei je Halbschale auch zwei derartige Nasen vorgesehen sein, sodass bei einem vier Längsnuten aufweisenden Profilrohr im montierten Zustand jede Längsnut mit einer zugehörigen Nase belegt ist. Durch eine derartige leicht entfernbare Nase kann somit sowohl eine Drehfixierung des Profilrohrs in der Rohraufnahme, als auch durch ein einfaches Abknicken der jeweiligen Nasen eine drehwinkelunabhängige Fixierung des Profilrohrs in der Rohraufnahme erreicht werden. Für beide Ausführungsformen kann dabei dieselbe Halbschale verwendet werden, die gegebenenfalls entsprechend durch ein Abknicken der Nasen angepasst werden muss.

Bei einer vorteilhaften Weiterbildung der Erfindung, besitzt jede Halbschale an einem ersten Halbschalenlängsrand eine Nut und an einem zweiten Halbschalenlängsrand eine komplementär dazu ausgebildete Feder, sodass die beiden Halbschalen in montiertem Zustand an ihren Halbschalenlängsrändern jeweils über eine Teilweise geschlossene Nut- und Federverbindung miteinander verbunden sind. Im Bereich der Rohraufnahme ist dabei an den Halbschalenlängsrändern keine Nut und keine Feder vorgesehen, sodass die beiden Halbschalenlängsrändern in diesem Bereich von einander beabstandet sind einen Schlitz bilden. Die Nut und Federverbindung bietet dabei den großen Vorteil einer eindeutigen Montagelage, sodass bei einem Montieren des aus den beiden Halbschalen bestehenden Verbinders eine korrekte Montagelage erzwungen wird. Über die im Bereich der Rohraufnahme nicht vorhandene Nut- und Federverbindung bzw. den dort vorhandenen Schlitz zwischen den beiden Halbschalenlängsrändern besteht die Möglichkeit, ein sogenanntes Doppelrohrprofil mit zwei parallelen Profilrohren, die über einen Steg miteinander verbunden sind, einfach und zuverlässig an einem weiteren Profilrohr anzubinden. Hierbei wird auf zwei benachbarte Längsenden der Profilrohre des Doppelrohrprofils jeweils ein Verbinder derart aufgesteckt, dass der Steg des Doppelrohrprofils durch den Schlitz zwischen den Halbschalen geführt ist. durch den zwischen den beiden Halbschalenlängsrändern verbleibenden Schlitz ist somit ein Einsatz eines solchen Verbinders sowohl bei normalen Profilrohren als auch bei Doppelrohrprofilen mit zwei Profilrohren und einem dazwischen angeordneten Steg ohne weiteres möglich. Bei bislang aus dem Stand der Technik bekannten Verbindern mit über die gesamte Länge der Halbschalenlängsrändern geführten Nuten bzw. Federn, war dies nicht möglich, sodass bislang der die beiden Profilrohre des Doppelrohrprofils miteinander verbindende Steg im Bereich der Verbinder entfernt werden musste. Mit dem erfindungsgemäßen ausgestalteten Verbinder ist dies nicht erforderlich, sodass eine Montage von Doppelrohrprofilen deutlich vereinfacht werden kann.

Bei einer vorteilhaften Weiterbildung der erfindungsgemäßen Lösung sind die erste und die zweite Halbschale als Gleichteile ausgebildet. Eine Ausbildung der beiden Halbschalen als Gleichteile reduziert die Werkzeugkosten und damit auch die Stückkosten und ermöglicht somit neben einer qualitativ hochwertigen zugleich auch eine sehr kostengünstige Ausbildung der Verbinder.

Bei einer weiteren vorteilhaften Ausführungsform der erfindungsgemäßen Lösung weist jede Halbschale eine quer zur Längsrichtung verlaufende Durchgangsöffnung für die Schraubverbindung auf, wobei in jeder Halbschale eine von einem Halbschalenrücken zugängige, sechseckförmige Aufnahme für eine Mutter der Schraubverbindung vorgesehen ist. Durch die Ausbildung der beiden Halbschalen als Gleichteile, ist es möglich, die Schraubverbindung richtungsunabhängig auszuführen, das heißt, es kann eine Schraube sowohl zuerst durch die erste und dann durch die zweite Halbschale gesteckt werden als auch in umgekehrter Richtung. Durch das Aufschrauben der Mutter und die Aufnahme dieser Mutter in der zugehörigen komplementären, insbesondere sechseckförmigen, Aufnahme, kann ein Anziehen der Schraubverbindung vergleichsweise einfach erfolgen.

Zweckmäßig weist jede Halbschale an einem der Rohraufnahme abgewandten Längsende eine quer zur Längsrichtung ausgerichtete Kante mit einer Hinterschnittkontur auf, so dass der Verbinder im montierten Zustand mit seinen beiden Kanten in zugehörige Profilnuten eines weiteren Profilrohrs eingreifen kann und darüber an dem weiteren Profilrohr fixierbar ist. Derartige Profilrohre, beispielsweise Rundrohre, weisen jeweils Längsnuten auf, wobei ein Verbinder mit seinen beiden Kanten in zwei benachbarte Längsnuten eingreifen und diese hintergreifen kann, wobei durch ein Festziehen der Schraubverbindung die beiden Kanten an die beiden Nutränder angedrückt werden und dadurch die Fixierung des Verbinders an dem weiteren Profilrohr erfolgen kann. Die Kante und die Hinterschnittkontur bilden dabei zusammen eine Hakenkontur.

Bei einer weiteren vorteilhaften Ausführungsform der erfindungsgemäßen Lösung sind/ist das Profilrohr und/oder die Halbschalen aus Aluminium ausgebildet. Insbesondere die Ausbildung des Profilrohrs als Strangpressprofil ermöglicht eine kostengünstige und zugleich gewichtsoptimierte Herstellung desselben. Auch die Halbschalen und damit der Verbinder können aus Aluminium ausgebildet sein, wobei selbstverständlich rein theoretisch auch denkbar ist, den Verbinder und damit die Halbschalen aus Kunststoff auszubilden.

Die vorliegende Erfindung beruhte weiter auf dem allgemeinen Gedanken, einen Verbinder für ein zuvor beschriebenes Profilrohrsystem anzugeben, wobei ein solcher Verbinder eine erste Halbschale und eine zweite Halbschale aufweist, die über eine Schraubverbindung miteinander verschraubbar sind. Darüber hinaus besitzt ein solcher Verbinder eine sacklochartige Rohraufnahme mit einem Boden, wobei an einer Innenmantelfläche der Rohraufnahme der ersten und/oder zweiten Halbschale zumindest eine nach innen abstehende Nase angeordnet ist. Über eine derartige nach innen abstehende Nase, welche bei auf einem Profilrohr montiertem Verbinder in eine zugehörige Längsnut des Profilrohrs eingreift, kann eine einfache und zugleich effektive Verdrehsicherung geschaffen werden. Die zumindest eine Nase je Halbschale ist dabei üblicherweise einstückig mit der jeweiligen Halbschale ausgebildet und wird zusammen mit dieser hergestellt, sodass die Verdrehsicherung durch eine einfache Anpassung eines Druckgusswerkzeugs, sofern beispielsweise die Halbschale aus Aluminium ausgebildet ist, realisierbar ist. Mittels einer derartigen Nase kann auf bislang für eine Verdrehsicherung eingesetzte separate Bauteile, wie beispielsweise ein Fliesenkreuz, verzichtet werden, wodurch nicht nur die Herstellungskosten für das zusätzliche Bauteil entfallen, sondern auch die für dieses bislang erforderlichen Lager- und Logistikkosten. Zudem entfallen auch die Montagekosten, da eine separate Montage der Verdrehsicherung durch die erfindungsgemäß an der jeweiligen Halbschale vorgesehene Nase entfällt.

Zweckmäßig weist die Nase eine Sollbruchstelle auf und ist durch ein Knicken abbrechbar. Wird beispielsweise keine Verdrehsicherung gewünscht, so kann die die Verdrehsicherung darstellende Nase einfach, beispielswiese mittels eines Schraubenziehers, abgeknickt und dadurch abgebrochen werden. Die jeweilige Nase erstreckt sich dabei vorzugsweise linienförmig in Umfangsrichtung und zwar so weit, dass sie möglichst spielfrei in eine zugehörige Längsnut des Profilrohrs einsetzbar ist. Durch die sich in Umfangsrichtung linienförmig erstreckende Nase ist diese durch eine darauf in Axialrichtung, beispielsweise durch ein Einstecken eines Schraubenziehers in die sacklochartige Rohraufnahme, einwirkende Kraft vergleichsweise einfach umknickbar bzw. abbrechbar, da die Nase, beispielsweise im Übergang zur Innenmantelfläche der zugehörigen Halbschale, beispielsweise eine Querschnittsreduzierung aufweist. Eine derartige Querschnittsreduzierung kann ebenfalls mittels eines entsprechenden Druckgusswerkzeugs vergleichsweise einfach realisiert werden.

Zweckmäßig weist jede Halbschale an einem ersten Halbschalenlängsrand eine Nut und an einem zweiten Halbschalenlängsrand eine komplementär dazu ausgebildete Feder auf, sodass die beiden Halbschalen im montierten Zustand an ihrem Halbschalenlängsrändern jeweils über eine zumindest teilweise geschlossene Nut- und Federverbindung miteinander verbunden sind. Im Bereich der sacklochartigen Rohraufnahme ist an den Halbschalenlängsrändern keine Nut und keine Feder vorgesehen, sodass die beiden Halbschalenlängsränder in diesem Bereich von einander beabstandet sind und einen Schlitz bilden. Über einen derartigen Schlitz ist der Einsatz des erfindungsgemäßen Verbinders sowohl bei einfachen Profilrohren als auch bei Doppelrohrprofilen mit dazwischen angeordnetem Steg vergleichsweise einfach möglich, da der Steg durch die Schlitze der beiden benachbarten Verbinder geführt werden kann.

Zweckmäßig sind die erste und die zweite Halbschale des Verbinders als Gleichteile ausgebildet. Hierdurch lassen sich die Werkzeugkosten und damit auch die Stückkosten reduzieren und eine kostengünstige Herstellung des Verbinders realisieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung innerhalb des Schutzbereichs der beigefügten Ansprüche verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: ein erfindungsgemäßes Profilrohrsystem mit einem an einem weiteren Profilrohr angebundenen erfindungsgemäßen Verbinder und noch nicht eingestecktem Profilrohr,
- Fig. 2: eine Darstellung wie in Figur 1, jedoch in montiertem Zustand,
- Fig. 3: eine Ansicht aus Richtung A auf das erfindungsgemäße Profilrohrsystem,
- Fig. 4: eine Darstellung wie in Figur 1, jedoch bei einem Profilrohrsystem mit einem Doppelrohrprofil,
- Fig. 5: eine Darstellung wie in Figur 2, jedoch ebenfalls mit einem Doppelrohrprofil,
- Fig. 6: eine Darstellung wie in Figur 3, jedoch ebenfalls mit einem Doppelrohrprofil,
- Fig. 7: eine Explosionsdarstellung eines erfindungsgemäßen Verbinders,
- Fig. 8: einen aus zwei Halbschalen zusammengeschraubten Verbinder,
- Fig. 9: eine Draufsicht auf den erfindungsgemäßen Verbinder,
- Fig. 10: eine Innenansicht einer Halbschale des erfindungsgemäßen Verbinders.

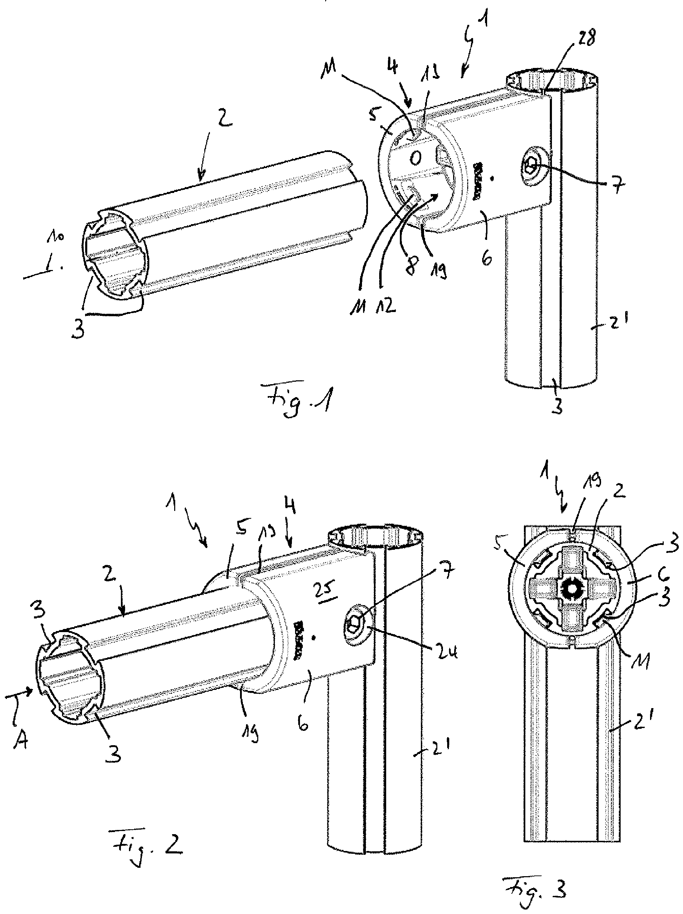

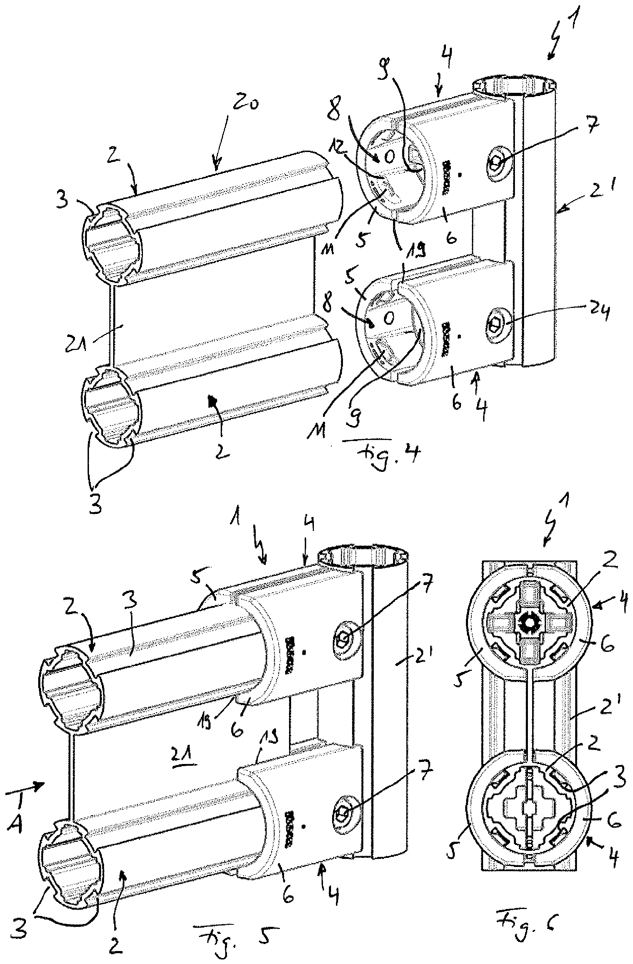

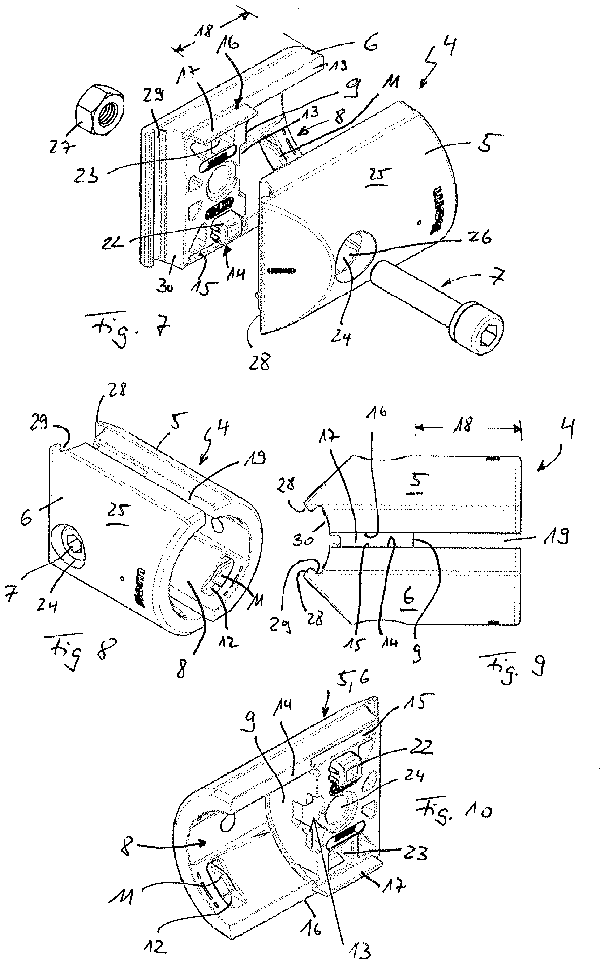

Entsprechend den Figuren 1 bis 6, weist ein erfindungsgemäßes Profilrohrsystem 1 zumindest ein Profilrohr 2 mit zumindest zwei parallelen Längsnuten 3 auf. Darüber hinaus besitzt das erfindungsgemäße Profilrohrsystem 1 einen Verbinder 4 (vergleiche auch die Figuren 7 bis 10) zum längsendseitigen Anbringen an dem Profilrohr 2, wobei der Verbinder 4 eine erste Halbschale 5 und eine zweite Halbschale 6 aufweist, die über eine Schraubverbindung 7 miteinander verschraubbar sind. Der Verbinder 4 besitzt eine sacklochartige Rohraufnahme 8 mit einem Boden 9, in welche das Profilrohr 2, vorzugsweise bis zum Boden 9, einsteckbar ist und in der das Profilrohr 2 über die zwei fest miteinander verschraubten Halbschalen 5, 6 fixierbar ist. Um eine Verdrehsicherung für das Profilrohr 2 um seine Längsachse 10 konstruktiv einfach, kostengünstig und zugleich montagefreundlich erreichen zu können, ist an einer Innenmantelfläche der Rohraufnahme 8 der ersten und/oder zweiten Halbschale 5, 6 zumindest eine nach radial innen abstehende Nase 11 angeordnet, die in montiertem Zustand (vergleiche insbesondere die Figuren 3 und 4) in eine Längsnut 3 des Profilrohrs 2 eingreift und dadurch eine Verdrehsicherung für dieses bildet.

Betrachtet man die Nase 11 näher, so kann man erkennen, dass diese vorzugsweise eine trapezförmige Gestalt aufweist und sich in Umfangsrichtung der Innenmantelfläche der Rohraufnahme 8 der Halbschale 5, 6 erstreckt (vergleiche die Figuren 8 und 10) und in Axialrichtung (entlang der Längsachse 10) eine deutlich geringere Dicke aufweist als in Umfangsrichtung. Durch die trapezförmige Ausgestaltung der Nase 11 wird ein Einführen derselben in eine zugehörige Längsnut 3 des Profilrohrs 2 vereinfacht. Durch die unterschiedliche Dicke der Nase 11 in Umfangsrichtung bzw. in Axialrichtung, lässt sich die Nase 11 durch ein Werkzeug, beispielsweise einen Schraubenziehers, zudem vergleichsweise einfach abknicken und abbrechen, wodurch es vergleichsweise einfach möglich ist, ein entsprechendes Profilrohr 2 drehwinkelunabhängig in der Rohraufnahme 8 zu montieren. Dabei kann die zumindest eine Nase 11 eine Sollbruchstelle aufweisen, welche das Abknicken und schließlich auch das Abbrechen der Nase 11 vereinfacht.

Betrachtet man die Figuren 1, 4, 7, 8 und 10 weiter, so kann man erkennen, dass die Nase 11 zudem in einer an der Innenmantelfläche der Rohraufnahme 8 angeordneten Vertiefung 12 angeordnet ist, sodass bei einem Abbrechen der Nase 11 und damit einem Entfernen der Verdrehsicherung kein Material über die Innenoberfläche der Rohraufnahme 8 übersteht und dadurch unter Umständen ein Verdrehen des in der Rohraufnahme 8 aufgenommenen Profilrohrs 2 behindert. Dabei ist selbstverständlich klar, dass die Nase 11 trotz ihrer Anordnung in der Vertiefung 12 in nicht abgebrochenem Zustand nach innen über die Innenoberfläche der Rohraufnahme 8 übersteht. Die Sollbruchstelle der Nase 11 liegt dabei in der Vertiefung 12, so dass nach dem Abbrechen der Nase 11 eine halbschalenseitige Bruchfläche in der Vertiefung 12 liegt, das heißt radial außerhalb der Innenmantelfläche der Rohraufnahme 8 und dadurch keinen Kontakt zu einem später in der Rohraufnahme 8 montierten Profilrohr 2 besitzt. Die Vertiefung 12 bietet weiter den Vorteil eines Widerlagers zum Heraushebeln/Abbrechen der Nase 11. Die Vertiefung 12 bildet beispielsweise eine Anlage-/Abstützfläche über die mit bspw. einem Schraubendreher gehebelt werden kann.

Mit der erfindungsgemäßen Nase 11 kann somit eine vergleichsweise einfache, kostengünstige und zugleich montagefreundliche Verdrehsicherung erreicht werden, da die Nase 11 vorzugsweise einstückig mit der jeweiligen Halbschale 5, 6 ausgebildet ist, sodass zur Herstellung der Nase 11 lediglich ein Herstellungswerkzeug, beispielweise ein Druckgusswerkzeug, sofern die Halbschale 5, 6 aus Aluminium gefertigt ist, angepasst werden muss. Bislang erfolgte eine derartige Verdrehsicherung über zusätzliche Bauteile, wie beispielsweise ein Fliesenkreuz, welches in einer zugehörigen Ausnehmung 13 am Boden 9 der Rohraufnahme 8 montiert und/oder in das Profilrohr 2 eingesetzt werden musste. Selbstverständlich kann ein derartiges Fliesenkreuz auch bei dem erfindungsgemäßen Verbinder 4 zusätzlich vorgesehen werden. Für eine Verdrehsicherung ist es jedoch nicht mehr erforderlich.

Betrachtet man den erfindungsgemäßen Verbinder 4 näher, so kann man erkennen, dass jede Halbschale 5, 6 an einem ersten Halbschalenlängsrand 14 eine Nut 15 und an einem zweiten Halbschalenlängsrand 16 eine komplementär zur Nut 11 ausgebildete Feder 17 aufweist, sodass die beiden Halbschalen 5, 6 in montiertem Zustand an ihren Halbschalenlängsrändern 14, 16 jeweils über eine zumindest teilweise geschlossene Nut- und Federverbindung miteinander verbunden und über diese auch zu einander ausgerichtet/positioniert sind. In einem Bereich 18 der sacklochartigen Rohraufnahme 8 ist dabei am ersten Halbschalenlängsrand 14 keine Nut 15 und am zweiten Halbschalenlängsrand 16 keine zugehörige Feder 17 vorgesehen, sodass die beiden Halbschalenlängsränder 14, 16 in diesem Bereich 18 voneinander beabstandet sind und einen Schlitz 19 (vergleiche insbesondere die Figur 9) bilden. Dies bietet den besonderen Vorteil, dass mit dem erfindungsgemäßen Verbinder 4 auch sogenannte Doppelrohrprofile 20 (vergleiche die Figuren 4 bis 6) mit zwei parallelen Profilrohren 2 und einem diese verbindenden Steg 21 vergleichsweise einfach an ein weiteres Profilrohr 2' angeschlossen werden können. Dies war mit bislang aus dem Stand der Technik bekannten Verbindern nicht möglich, da diese den erfindungsgemäßen Schlitz 19 nicht aufwiesen, sodass bei diesen der Steg 21 im Bereich der beiden Verbinder 4 entfernt werden musste, was aufwendig war. Mit den erfindungsgemäßen Verbindern 4 ist es möglich, diese auf zwei benachbarte Längsenden der Profilrohre 2 des Doppelrohrprofils 20 derart aufzustecken, dass der Steg 21 des Doppelrohrprofils 20 durch den Schlitz 19 zwischen den Halbschalen 5, 6 geführt ist.

Betrachtet man die beiden Halbschalen 5, 6, so kann man erkennen, dass diese als Gleichteile ausgebildet sind, wodurch diese kostengünstig herstellbar sind. Darüber hinaus besitzt jede Halbschale 5, 6 ein insbesondere quaderförmiges Positionierelement 22 sowie eine ebenfalls quaderförmige Positionieröffnung 23, welche bei miteinander verbundenen Halbschalen 5, 6 mit den Positionieröffnungen 23 bzw. Positionierelementen 22 der gegenüberliegenden Halbschale 6, 5 zusammen wirken und dadurch eine eindeutige Lagefixierung zwischen beiden Halbschalen 5, 6 erzwingen.

Jede Halbschale 5, 6 weist darüber hinaus eine quer zur Längsrichtung (Achsrichtung der Rohraufnahme 8) verlaufende Durchgangsöffnung 24 für die Schraubverbindung 7 auf, wobei in jeder Halbschale 5, 6 eine von einem Halbschalenrücken 25 zugängliche Aufnahme 26 für eine Mutter 27 der Schraubverbindung 7 vorgesehen, in der die Mutter 27 formschlüssig aufnehmbar ist (vergleiche insbesondere die Figur 7).

Darüber hinaus besitzt jede Halbschale 5, 6 an ihrem der Rohraufnahme 8 abgewandten Längsende eine quer zur Längsrichtung 10 ausgerichtete Kante 28 mit einer Hinterschnittkontur 29, sodass der Verbinder 4 im montierten Zustand mit seinen beiden Kanten 20 in zugehörige Längsnuten/Profilnuten 3 eines weiteren Profilrohrs 2' eingreifen kann und darüber an dem weiteren Profilrohr 2' fixierbar ist. Die Hinterschnittkonturen 29 besitzen dabei vorzugsweise einen abgerundeten Boden 30, der komplementär zu einer runden Außenkontur des weiteren Profilrohrs 2' ausgebildet ist und dadurch vorzugsweise flächig an dieser anliegt.

Mit dem erfindungsgemäßen Verbinder 4 und dem erfindungsgemäßen Profilrohrsystem 1 lässt sich somit eine Verdrehsicherung eines Profilrohrs 2 in dem Verbinder 4 mittels der erfindungsgemäßen Nase 11 vergleichsweise einfach realisieren, wobei durch die vorzugsweise leichte Abbrechbarkeit der Nasen 11 auch eine drehwinkelunabhängige Fixierung der Profilrohre 2 im Verbinder 4 möglich ist. Über die erfindungsgemäß vorgesehenen Schlitze 19 kann mit den erfindungsgemäßen Verbindern 4 auch ein Doppelrohrprofil 20 ohne weitere Bearbeitung vergleichsweise einfach montiert werden.

## Patentansprüche

1. Profilrohrsystem (1)
- mit zumindest einem Profilrohr (2) mit zumindest zwei parallelen Längsnuten (3),
- mit einem Verbinder (4) zum längsendseitigen Anbringen an dem Profilrohr (2), der eine erste Halbschale (5) und eine zweite Halbschale (6) aufweist, die über eine Schraubverbindung (7) miteinander verschraubbar sind,
- wobei der Verbinder (4) eine sacklochartige Rohraufnahme (8) mit einem Boden (9) aufweist, in welche das Profilrohr (2) einsteckbar und in der das Profilrohr (2) über die zwei fest miteinander verschraubten Halbschalen (5,6) fixierbar ist,
- wobei an einer Innenmantelfläche der Rohraufnahme (8) der ersten und/oder zweiten Halbschale (5,6) zumindest eine nach innen abstehende Nase (11) angeordnet ist, die in montiertem Zustand in eine Längsnut (3) des Profilrohrs (2) eingreift und eine Verdrehsicherung für dieses bildet, **dadurch gekennzeichnet,**
- **dass** die zumindest eine Nase (11) eine Sollbruchstelle aufweist und durch ein Knicken abbrechbar ist, wodurch eine drehwinkelunabhängige Fixierung des Profilrohrs (2) in der Rohraufnahme (8) realisierbar ist,
- **dass** die Nase (11) in einer an der Innenmantelfläche der Rohraufnahme (8) angeordneten Vertiefung (12) angeordnet ist.

2. Profilrohrsystem nach Anspruch 1,
**dadurch gekennzeichnet,**
- **dass** jede Halbschale (5,6) an einem ersten Halbschalenlängsrand (14) eine Nut (15) und an einem zweiten Halbschalenlängsrand (16) eine komplementär dazu ausgebildete Feder (17) aufweist, so dass die beiden Halbschalen (5,6) in montiertem Zustand an ihren Halbschalenlängsrändern (14,16) jeweils über eine teilweise geschlossene Nut- und Federverbindung miteinander verbunden sind,
- **dass** im Bereich der Rohraufnahme (8) am ersten Halbschalenlängsrand (14) keine Nut (15) und am zweiten Halbschalenlängsrand (16) keine Feder (17) vorgesehen ist, sodass die beiden Halbschalenlängsränder (14,16) in diesem Bereich (18) voneinander beabstandet sind und einen Schlitz (19) bilden.

3. Profilrohrsystem nach Anspruch 1 oder 2,
**dadurch gekennzeichnet,**
**dass** ein Doppelrohrprofil (20) mit zwei parallelen Profilrohren (2) vorgesehen ist, die über einen Steg (21) miteinander verbunden sind, wobei auf zwei benachbarte Längsenden der Profilrohre (2) des Doppelrohrprofils (20) jeweils ein Verbinder (4) derart aufgesteckt ist, dass der Steg (21) des Doppelrohrprofils (20) durch den Schlitz (19) zwischen den Halbschalen (5,6) geführt ist.

4. Profilrohrsystem nach einem der vorhergehenden Ansprüche,
**dadurch gekennzeichnet,**
- **dass** jede Halbschale (5,6) eine quer zur Längsrichtung verlaufende Durchgangsöffnung (24) für die Schraubverbindung (7) aufweist, wobei in jeder Halbschale (5,6) eine von einem Halbschalenrücken (25) zugängige Aufnahme (26) für eine Mutter (27) der Schraubverbindung (7) vorgesehen ist, in der die Mutter (27) formschlüssig aufnehmbar ist, und/oder
- **dass** die erste und die zweite Halbschale (5,6) als Gleichteile ausgebildet sind.

5. Profilrohrsystem nach einem der vorhergehenden Ansprüche,
**dadurch gekennzeichnet,**
**dass** jede Halbschale (5,6) an ihrem der Rohraufnahme (8) abgewandten Längsende eine quer zur Längsrichtung ausgerichtete Kante (28) mit einer Hinterschnittkontur (29) aufweist, so dass der Verbinder (4) in montiertem Zustand mit seinen beiden Kanten (28) in zugehörige Längsnuten (3) eines weiteren Profilrohres (2') eingreifen kann und darüber an dem weiteren Profilrohr (2') fixierbar ist.

6. Profilrohrsystem nach Anspruch 5,
**dadurch gekennzeichnet,**
**dass** die Hinterschnittkonturen (29) in einen abgerundeten Boden (30) übergehen, der komplementär zu einer runden Außenkontur des weiteren Profilrohrs (2') ausgebildet ist.

7. Verbinder (4) für ein Profilrohrsystem (1) nach Anspruch 1
- mit einer ersten Halbschale (5) und einer zweiten Halbschale (6), die über eine Schraubverbindung (7) miteinander verschraubbar sind,
- mit einer sacklochartigen Rohraufnahme (8) mit einem Boden (9), **dadurch gekennzeichnet,**
- **dass** an einer Innenmantelfläche der Rohraufnahme (8) der ersten und/oder zweiten Halbschale (5,6) zumindest eine nach innen abstehende Nase (11) angeordnet ist, die eine Sollbruchstelle aufweist und durch ein Knicken abbrechbar ist,
- **dass** die Nase (11) in einer an der Innenmantelfläche der Rohraufnahme (8) angeordneten Vertiefung (12) angeordnet ist.

8. Verbinder nach Anspruch 7,
**dadurch gekennzeichnet,**
- **dass** jede Halbschale (5,6) an einem ersten Halbschalenlängsrand (14) eine Nut (15) und an einem zweiten Halbschalenlängsrand (16) eine komplementär dazu ausgebildete Feder (17) aufweist, so dass die beiden Halbschalen (5,6) in montiertem Zustand an ihren Halbschalenlängsrändern (14,16) jeweils über eine teilweise geschlossene Nut- und Federverbindung miteinander verbunden sind,
- **dass** im Bereich (18) der Rohraufnahme (8) am ersten Halbschalenlängsrand (14) keine Nut (15) und am zweiten Halbschalenlängsrand (16) keine Feder (17) vorgesehen ist, sodass die beiden Halbschalenlängsränder (14,16) in diesem Bereich (18) voneinander beabstandet sind und einen Schlitz (19) bilden.

9. Verbinder nach einem der Ansprüche 7 oder 8,
**dadurch gekennzeichnet,**
**dass** die erste und die zweite Halbschale (5,6) als Gleichteile ausgebildet sind.

10. Verbinder nach einem der Ansprüche 7 bis 9,
**dadurch gekennzeichnet,**
**dass** jede Halbschale (5,6) an ihrem der Rohraufnahme (8) abgewandten Längsende eine quer zur Längsrichtung ausgerichtete Kante (28) mit einer Hinterschnittkontur (29) aufweist.

11. Verbinder nach Anspruch 10,
**dadurch gekennzeichnet,**
**dass** die Hinterschnittkonturen (29) in einen abgerundeten Boden (30) übergehen.

## Claims

1. Profile pipe system (1)
- having at least one profile pipe (2) having at least two parallel longitudinal grooves (3),
- having a connector (4) to be mounted on a longitudinal end of the profile pipe (2), which connector has a first half shell (5) and a second half shell (6) which can be screwed together with one another via a screw connection (7),
- wherein the connector (4) has a pipe receptacle (8), having a floor (9), in the manner of a blind hole, into which pipe receptacle the profile pipe (2) can be inserted and in which the profile pipe (2) can be fixed via the two half shells (5, 6) which are screwed securely to one another,
- wherein on an inner jacket surface of the pipe receptacle (8) of the first and/or second half shell (5, 6) is arranged at least one nose (11) protruding to the inside, which in installed state engages in a longitudinal groove (3) of the profile pipe (2) and forms a protection against twisting for said profile pipe,
**characterised in**
- **that** the at least one nose (11) has a predetermined breaking point and can be broken off by snapping, as a result of which it is possible to realise a fixing of the profile pipe (2) in the pipe receptacle (8) which is independent of rotational angle,
- **that** the nose (11) is arranged in an indentation (12) arranged on the inner jacket surface of the pipe receptacle (8).

2. Profile pipe system according to claim 1,
**characterised in**
- **that** each half shell (5, 6) has on a first half shell longitudinal edge (14) a groove (15) and on a second half shell longitudinal edge (16) a tongue (17) formed in a manner complementary thereto, such that the two half shells (5, 6) in installed state are connected with one another at their half shell longitudinal edges (14, 16) in each case via a partially closed tongue-and-groove connection,
- **that** in the region of the pipe receptacle (8) no groove (15) is provided on the first half shell longitudinal edge (14) and no tongue (17) is provided on the second half shell longitudinal edge (16), such that the two half shell longitudinal edges (14, 16) are spaced from one another in this region (18) and form a slot (19).

3. Profile pipe system according to claim 1 or 2,
**characterised in**
**that** a double pipe profile (20) is provided having two parallel profile pipes (2) which are connected with one another via a web (21), wherein on two adjacent longitudinal ends of the profile pipes (2) of the double pipe profile (20) is plugged-on in each case a connector (4) such that the web (21) of the double pipe profile (20) is guided through the slot (19) between the half shells (5, 6).

4. Profile pipe system according to any of the preceding claims,
**characterised in**
- **that** each half shell (5, 6) has a through opening (24), extending transversely to the longitudinal direction, for the screw connection (7), wherein in each half shell (5, 6) is provided a receptacle (26), accessible from a half shell back (25), for a nut (27) of the screw connection (7), in which the nut (27) can be form-fittingly accommodated, and/or
- **that** the first and the second half shells (5, 6) are formed as same parts.

5. Profile pipe system according to any of the preceding claims,
**characterised in**
**that** each half shell (5, 6) has on its longitudinal end facing away from the pipe receptacle (8) an edge (28), aligned transversely to the longitudinal direction, having a undercut contour (29), such that the connector (4) in installed state can engage with its two edges (28) in associated longitudinal grooves (3) of a further profile pipe (2') and via this can be fixed to the further profile pipe (2').

6. Profile pipe system according to claim 5,
**characterised in**
**that** the undercut contours (29) transition into a rounded floor (30) which is formed in a manner which is complementary to a round outer contour of the further profile pipe (2').

7. Connector (4) for a profile pipe system (1) according to claim 1
- having a first half shell (5) and a second half shell (6) which can be screwed together via a screw connection (7),
- having a pipe receptacle (8) in the manner of a blind hole having a floor (9), **characterised in**
- **that** on an inner jacket surface of the pipe receptacle (8) of the first and/or second half shell (5, 6) is arranged at least one nose (11) protruding to the inside which has a predetermined breaking point and can be broken off by means of snapping,
- **that** the nose (11) is arranged in an indentation (12) arranged on the inner jacket surface of the pipe receptacle (8).

8. Connector according to claim 7,
**characterised in**
- **that** each half shell (5, 6) has a groove (15) on a first half shell longitudinal edge (14) and a tongue (17) formed in a complementary manner thereto on a second half shell longitudinal edge (16), such that the two half shells (5, 6) in installed state are connected with one another at their half shell longitudinal edges (14, 16) in each case by means of a partially closed tongue-and-groove connection,
- **that** in the region (18) of the pipe receptacle (8) no groove (15) is provided on the first half shell longitudinal edge (14) and no tongue (17) is provided on the second half shell longitudinal edge (16), such that the two half shell longitudinal edges (14, 16) are spaced from one another in this region (18) and form a slot (19).

9. Connector according to any of claims 7 or 8,
**characterised in**
**that** the first and the second half shells (5, 6) are designed as same parts.

10. Connector according to any of claims 7 to 9,
**characterised in**
**that** each half shell (5, 6) has on its longitudinal end facing away from the pipe receptacle (8) an edge (28), aligned transversely to the longitudinal direction, having an undercut contour (29).

11. Connector according to claim 10,
**characterised in**
**that** the undercut contours (29) transition into a rounded floor (30).

## Revendications

1. Système de tubes profilés (1)
- avec au moins un tube profilé (2) avec au moins deux rainures longitudinales (3) parallèles,
- avec un connecteur (4) pour le montage côté extrémité longitudinale sur le tube profilé (2), qui présente une première demi-coque (5) et une deuxième demi-coque (6), qui peuvent être vissées l'une avec l'autre par le biais d'un raccord vissé (7),
- dans lequel le connecteur (4) présente un logement de tube (8) de type trou borgne avec un fond (9), dans lequel le tube profilé (2) est enfichable et dans lequel le tube profilé (2) peut être fixé par le biais de deux demi-coques (5, 6) vissées solidement l'une à l'autre,
- dans lequel au moins un nez (11) en saillie vers l'intérieur, qui vient en prise à l'état monté dans une rainure longitudinale (3) du tube profilé (2) et forme une sécurité anti-rotation pour celui-ci, est agencé au niveau d'une surface d'enveloppe intérieure du logement de tube (8) de la première et/ou deuxième demi-coque (5, 6),
**caractérisé en ce**
- **que** l'au moins un nez (11) présente un point de rupture théorique et est détachable par pliage, ce par quoi une fixation indépendante de l'angle de rotation du tube profilé (2) est réalisable dans le logement de tube (8),
- **que** le nez (11) est agencé dans un évidement (12) agencé au niveau de la surface d'enveloppe intérieure du logement de tube (8).

2. Système de tubes profilés selon la revendication 1,
**caractérisé en ce**
- **que** chaque demi-coque (5, 6) présente au niveau d'un premier bord longitudinal de demi-coque (14) une rainure (15) et au niveau d'un deuxième bord longitudinal de demi-coque (16) une languette (17) réalisée de manière complémentaire à celle-ci, de sorte que les deux demi-coques (5, 6) sont reliées l'une à l'autre à l'état monté au niveau de leurs bords longitudinaux de demi-coque (14, 16) respectivement par le biais d'un raccord rainure-languette partiellement fermé,
- **que** dans la zone du logement de tube (8) au niveau du premier bord longitudinal de demi-coque (14) aucune rainure (15) n'est prévue et au niveau du deuxième bord longitudinal de demi-coque (16) aucune languette (17) n'est prévue, de sorte que les deux bords longitudinaux de demi-coque (14, 16) sont espacés l'un de l'autre dans cette zone (18) et forment une fente (19).

3. Système de tubes profilés selon la revendication 1 ou 2,
**caractérisé en ce**
**qu'**un profil de double tube (20) avec deux tubes profilés (2) parallèles est prévu, qui sont reliés l'un à l'autre par le biais d'une entretoise (21), dans lequel respectivement un connecteur (4) est enfiché sur deux extrémités longitudinales adjacentes des tubes profilés (2) du profil de double tube (20) de sorte que l'entretoise (21) du profil de double tube (20) est guidée à travers la fente (19) entre les demi-coques (5, 6).

4. Système de tubes profilés selon l'une quelconque des revendications précédentes,
**caractérisé en ce**
- **que** chaque demi-coque (5, 6) présente une ouverture de passage (24) s'étendant transversalement à la direction longitudinale pour le raccord vissé (7), dans lequel un logement (26) accessible depuis un dos de demi-coque (25) pour un écrou (27) du raccord vissé (7), dans lequel l'écrou (27) peut être reçu par complémentarité de forme, est prévu dans chaque demi-coque (5, 6) et/ou
- **que** la première et la deuxième demi-coque (5, 6) sont réalisées en tant que pièces identiques.

5. Système de tubes profilés selon l'une quelconque des revendications précédentes,
**caractérisé en ce**
**que** chaque demi-coque (5, 6) présente au niveau de son extrémité longitudinale opposée au logement de tube (8), une arête (28) orientée transversalement à la direction longitudinale avec un contour de contre-dépouille (29), de sorte que le connecteur (4) peut venir en prise à l'état monté avec ses deux arêtes (28) dans des rainures longitudinales (3) correspondantes d'un autre tube profilé (2') et peut être fixé en outre sur l'autre tube profilé (2').

6. Système de tubes profilés selon la revendication 5,
**caractérisé en ce**
**que** les contours de contre-dépouille (29) se transforment en un fond (30) arrondi, qui est réalisé de manière complémentaire à un contour extérieur rond de l'autre tube profilé (2').

7. Connecteur (4) pour un système de tubes profilés (1) selon la revendication 1
- avec une première demi-coque (5) et une deuxième demi-coque (6), qui peuvent être vissées l'une à l'autre par le biais d'un raccord vissé (7),
- avec un logement de tube (8) de type trou borgne avec un fond (9),
**caractérisé en ce**
- **qu'**au moins un nez (11) en saillie vers l'intérieur, qui présente un point de rupture théorique et est détachable par pliage, est agencé au niveau d'une surface d'enveloppe intérieure du logement de tube (8) de la première et/ou deuxième demi-coque (5, 6),
- **que** le nez (11) est agencé dans un évidement (12) agencé au niveau de la surface d'enveloppe intérieure du logement de tube (8).

8. Connecteur selon la revendication 7,
**caractérisé en ce**
- **que** chaque demi-coque (5, 6) présente au niveau d'un premier bord longitudinal de demi-coque (14) une rainure (15) et au niveau d'un deuxième bord longitudinal de demi-coque (16) une languette (17) réalisée de manière complémentaire à celle-ci, de sorte que les deux demi-coques (5, 6) sont reliées l'une à l'autre à l'état monté au niveau de leurs bords longitudinaux de demi-coque (14, 16) respectivement par le biais d'un raccord rainure-languette partiellement fermé.
- **que** dans la zone (18) du logement de tube (8) au niveau du premier bord longitudinal de demi-coque (14) aucune rainure (15) n'est prévue et au niveau du deuxième bord longitudinal de demi-coque (16) aucune languette (17) n'est prévue, de sorte que les deux bords longitudinaux de demi-coque (14, 16) sont espacés l'un de l'autre dans cette zone (18) et forment une fente (19).

9. Connecteur selon l'une quelconque des revendications 7 ou 8,
**caractérisé en ce**
**que** la première et la deuxième demi-coque (5, 6) sont réalisées en tant que pièces identiques.

10. Connecteur selon l'une quelconque des revendications 7 à 9,
**caractérisé en ce**
**que** chaque demi-coque (5, 6) présente au niveau de son extrémité longitudinale opposée au logement de tube (8), une arête (28) orientée transversalement à la direction longitudinale avec un contour de contre-dépouille (29).

11. Connecteur selon la revendication 10,
**caractérisé en ce**
**que** les contours de contre-dépouille (29) se transforment en un fond (30) arrondi.
